# EUROPEAN PATENT SPECIFICATION

(11) **EP 1 598 262 B1**
(45) Date of publication and mention of the grant of the patent: **15.07.2009**
(21) Application number: 05104203.4
(22) Date of filing: 18.05.2005
(51) Int. Cl.: B62D 53/00

(54) **A tractor semi-trailer combination with detachable coupling means, and free rotation around a single rotation axis**
Sattelschlepper mit lösbarer Kupplung, und freier Rotation um eine Drehachse
Combinaison tracteur semi-remorque avec accouplement détachable et libre mouvement suivant un axe de rotation

(30) Priority: 18.05.2004 NL 1026217
(43) Date of publication of application: 23.11.2005
(73) Proprietor: Kerklingh, Herman Karel, 1541 RK Koog aan de Zaan (NL); Kerklingh, Eduard Paul, 1521 PL Wormerveer (NL)
(72) Inventor: Van der Zeijden, Aart, Leendert, 4128 SW Lexmond (NL)
(74) Representative: Van den Heuvel, Henricus Theodorus

(56) References cited:
- EP-A- 0 208 825
- EP-A- 0 704 369
- EP-A- 0 792 793
- DE-A- 3 402 442
- DE-A- 4 441 307
- DE-A- 10 203 712
- DE-A- 10 233 274
- FR-A- 2 089 909
- US-A- 3 791 664
- US-A- 4 049 289

## Description

The present invention relates to a tractor/trailer combination according to the preamble of claim 1, as disclosed in document DE 4302442. The invention also relates to a separate tractor and a separate trailer such as form part of such a combination.

Tractor/trailer combinations which can be releasably coupled are applied on a large scale. It is usual for such a combination to be pivotable round a vertical and one or more horizontal axes. The tractor (also referred to as truck) thus has considerable freedom of movement relative to the trailer, which provides such a tractor/trailer combination with a great manoeuvrability. Such a great manoeuvrability is advantageous for a professional driver but makes driving extremely complex for a less experienced and/or less well-trained driver. In determined countries (also including the Netherlands) there is legislation which imposes restrictions in respect of driving a tractor/trailer combination. The alternative to the use of a known tractor/trailer combination is the use of a truck with fixed or removable bodywork. The drawbacks which can be associated herewith are reduced flexibility during use (the drive unit and loading unit can only be used in combined form) and the drawback of a limited loading capacity of such a truck.

The American patent US 3,791,664 discloses a tractor/trailer combination comprising a motorized tractor and a trailer provided with a fifth wheel coupling. The coupled combination comprises at least two different situations. In the first situation, the fifth wheel coupling is positioned near the back-end of the tractor chassis. In this situation the coupled tractor/trailer combination has freedom of movement in two directions of rotation namely about the vertical and horizontal pivot axis of the coupling. In the second situation, the fifth wheel coupling is positioned near the front-end of the tractor chassis. In this second situation the coupled tractor/trailer combination has no freedom of movement since the tractor chassis is moved in between side guides of an adapter frame or socket device of the trailer and over a locking pin or retainer on the frame 28. Herewith the trailer and tractor are rigidly locked.

The present invention has for its object to provide an improved tractor/trailer combination with which the advantages of great flexibility in use and high loading capacity of the existing tractor/trailer combinations are combined with an increased convenience of operation.

The present invention provides for this purpose a tractor/trailer combination according to claim 1. For this purpose the tractor and trailer can be provided with structurally simple, co-acting guide means for coupling the tractor and the trailer together with the coupling part/mating-coupling part such that they have freedom of movement relative to each other in only one direction of rotation. The fifth wheel coupling to be applied is a standard trade item and as such is inexpensive to purchase and maintain. The coupling arm and locking means for the coupling arm can be manufactured in very simple manner as extra component simultaneously with the bodywork. Since it is an externally accessible and simple structural part, the coupling arm can also be assembled together with one of the combination parts and maintained in simple manner. The rotation axis of the rotation freedom provided by the co-acting coupling means is parallel to a wheel axle of the tractor/trailer combination. This means that the rotational axis is perpendicular to the longitudinal axis of the combination and parallel to the carrying surface on which the combination supports. It is noted that the term "parallel" must be interpreted sufficiently broadly so as to also include small deviations from the parallel in the order of magnitude of several degrees. A combination can thus deform to a limited extent as a result of production inaccuracies and/or as a result of use, whereby deviations of a maximum of several degrees can occur in said parallel state. The advantage of such a tractor/trailer combination is that the flexibility in the uncoupling and exchanging of tractor and trailers can be realized with simple measures and with a simple standard operation. The chance of excessive loading of the truck axle is limited without proportionally limiting the load-bearing capacity of the trailer. The axle pressures (the loads exerted by the separate wheel axles) of the tractor axles and the trailer axle(s) will be automatically distributed over the axles independently of each other due to the single freedom of rotation; whereby excessive loading of one of the axles is less likely to occur, this functionality being absent in a truck with a rigid chassis. The tractor/trailer combination furthermore provides a great convenience of use; the combination does after all form a rigid construction in the direction of travel. The lack of freedom of movement between the trailer and the tractor in the direction of travel makes the combination as easy (or even easier) to drive as a normal truck with a rigid frame. It is hereby probable that the demands made of a driver of a tractor/trailer combination according to the invention need not be as strict as the demands made of a driver of a tractor/trailer combination with a great relative freedom of movement. The present tractor/trailer combination links important advantages of the existing tractor/trailer combinations to a greater convenience of operation, comparable to the convenience of operation of a truck with rigid chassis. It is also advantageous that the conversion of existing combinations to a combination according to the present invention is possible by adding only a coupling arm and locking means to the combination.

The pivot coupling can for instance consist of a coupling rod which can be releasably mounted in a housing rotatably accommodating the coupling rod. Such a (single) coupling can fully provide the desired functionality. Only the fifth wheel coupling needs operating during coupling and uncoupling. The advantage here is that the coupling means can also be obtained as standard trade items; the assembly of such a fifth wheel coupling (consisting of a coupling plate on the one hand and a kingpin on the other) with the tractor and the trailer can correspond wholly with the assembly with a tractor/trailer combination known heretofore.

The guiding which can thus be realized can be formed on the one hand by projecting parts and on the other by stop surfaces engaging laterally on the projecting parts. The projecting parts can also have a function in the uncoupled situation of the combination; for instance by functioning as positioning pin during effecting of the coupling. The grooves can also be used to simplify the coupling of the combination parts, for instance by providing them with tapering openings. Another advantage of the application of grooves is that grooves enable a reliable locking of the coupling arm. This can be realized such that the coupling arm is connected pivotally on one side to one of the combination parts with a rotation freedom round a rotation axis parallel to a wheel axle of the tractor/trailer combination. It is simplest to connect the coupling arm pivotally to the tractive combination part and to have the locking means form part of the chassis of the trailer. The exchangeable, pulled combination parts can thus be converted more easily than the tractive combination parts. This is economically the most advantageous solution.

The European patent application EP 0 208 825 describes a tractor/trailer combination wherein the tractor and trailer are mutually connected by means of a fifth wheel coupling. Also provided is a locking device with which the combination is secured against pivoting about a vertical axis. In normal position, for use on the road, the interlocking is uncoupled. For cross-country manoeuvring and in order to increase the effective power of the tractor, the combination is shortened and interlocked. This takes place by displacing in longitudinal direction the part (the kingpin) of the fifth wheel coupling which is mounted on the trailer. It is stated on the one hand that the combination forms a rigid construction in the shortened situation, but it is also specified that the locking construction prevents slewing of the trailer but can however absorb "Fahrtschwingungen" (column 3, lines 41-42).

In yet another preferred embodiment, the tractor and the trailer are provided with co-acting stops for the purpose of limiting the freedom of movement in the rotation direction. The stroke length of the mutual freedom of movement is thus limited and it is possible to prevent undesirably great movements occurring. The chance of damage to the tractor/trailer combination can thus be limited.

For connection of the tractor and the trailer, the combination can also be provided with at least one releasable conduit coupling. Such a coupling can be incorporated in a conduit, for instance for the transmission of signals, and/or in a power supply line. It is for instance possible here to envisage electrical connections, pneumatic and hydraulic lines, electrical signal lines, glass fibre cables and so forth.

In an advantageous embodiment variant, the locking means are provided with at least contact surfaces manufactured from wear-resistant polymer material. Polymers (such as for instance polyethylene, polypropylene, polyoxymethylene and the co-polymers thereof) should be particularly envisaged here. In order to increase the lifespan of this polymer material, it is advantageous that it be embodied in a dark (black) colour, due to increased UV-resistence, and/or to incorporate one or more radical catchers in the polymer material.

The polymer material can be applied as solid material in for instance a block shape, optionally provided with grooves for guiding steel projecting parts. Alternatively however, it is also possible to embody only the contact surfaces in wear-resistant polymer material such that, as exchangeable wearing parts, they can be replaced with new ones after determined wear.

The invention also relates to a tractor (separately) provided with coupling means which provide freedom of movement in only one rotation direction when coupled to a trailer, and to a trailer provided with mating-coupling means which provide freedom of movement in only one rotation direction when coupled to a tractor, for the purpose of realizing a tractor/trailer combination as described above.

The present invention will be further elucidated on the basis of the non-limitative exemplary embodiments shown in the following figures. Herein:
figures 1A - 1C show side views of a tractor/trailer combination in which the relative position of the tractor and the trailer varies,
figure 2A shows a side view of an alternative embodiment variant of a tractor/trailer combination,
figure 2B shows a perspective detail view of a part of the tractor of figure 2A,
figure 2C shows a perspective view of the tractor/trailer combination according to figure 2A,
figure 3A is a side view of a second alternative embodiment variant of a tractor/trailer combination,
figure 3B is a perspective detail view of a part of the tractor of figure 3A,
figure 3C is a perspective view of the tractor/trailer combination according to figure 3A,
figure 4A shows a side view of an embodiment variant of the tractor/trailer combination according to the present invention,
figure 4B shows a perspective detail view of a part of the tractor of figure 4A, and
figure 4C is a perspective view of the tractor/trailer combination according to figure 4A.

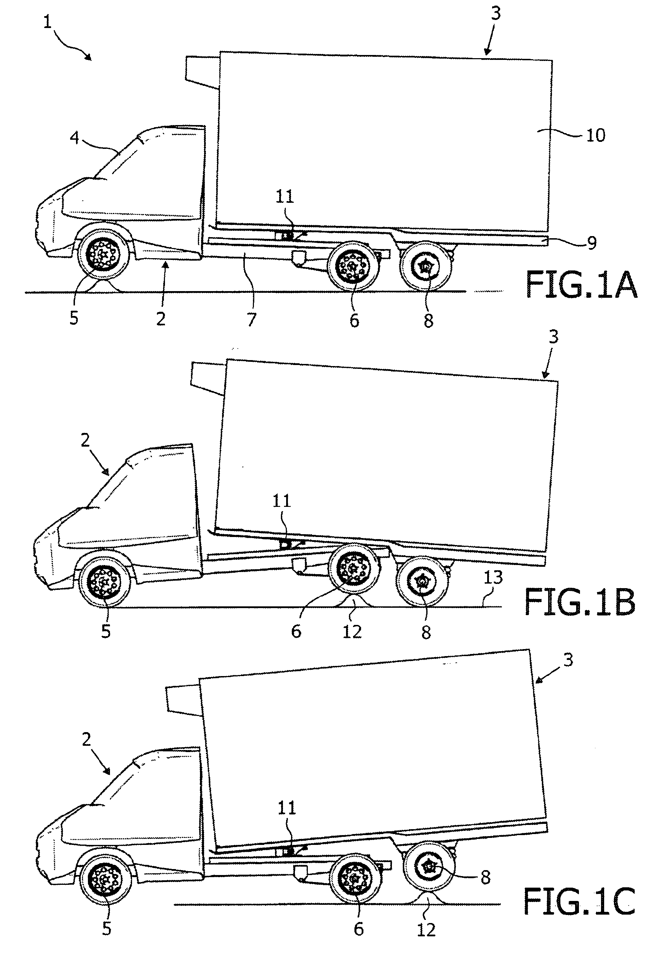

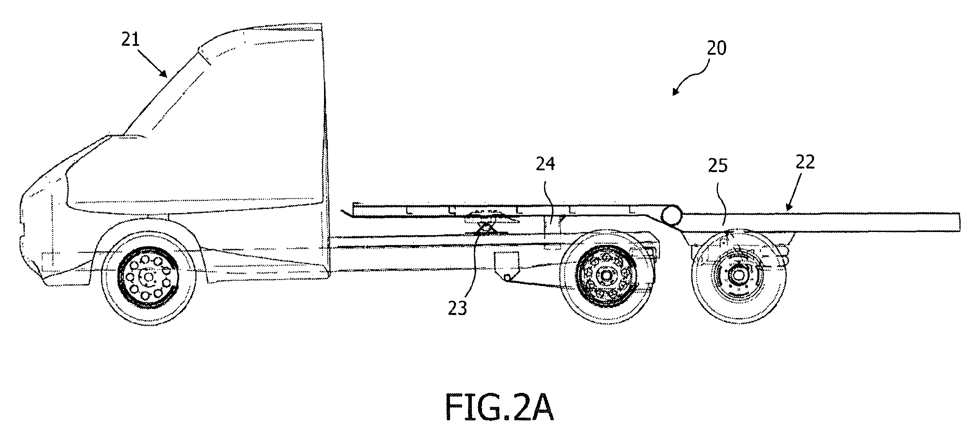

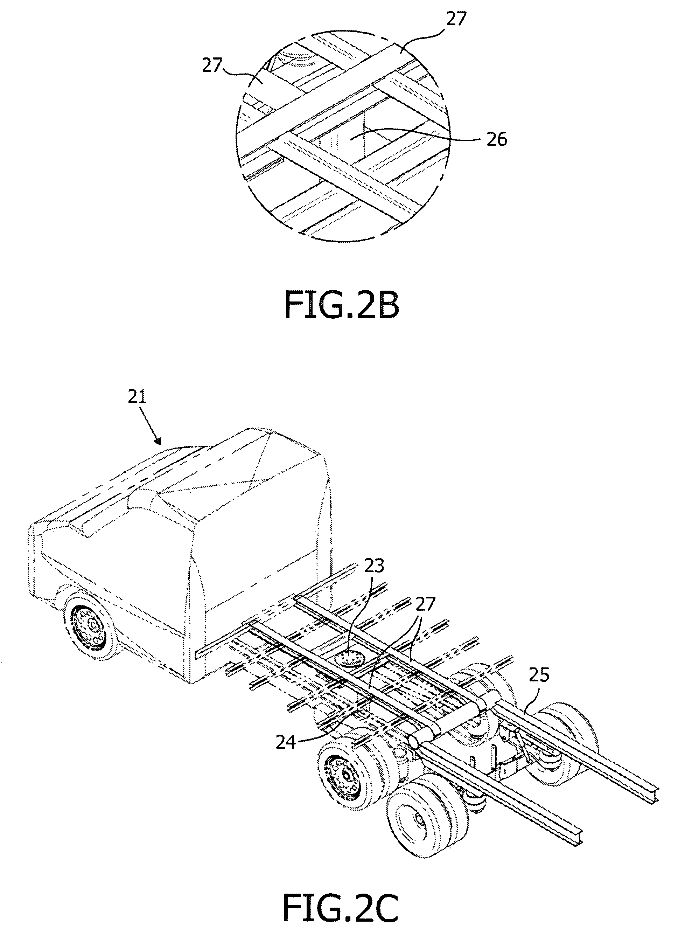

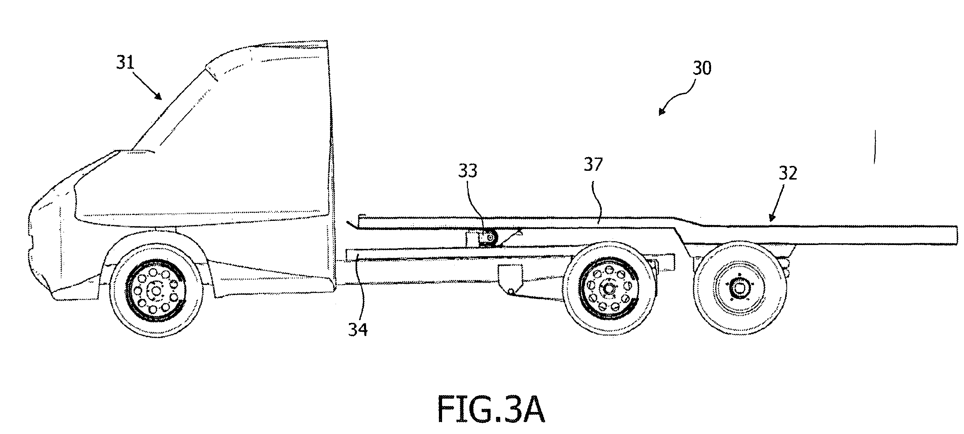

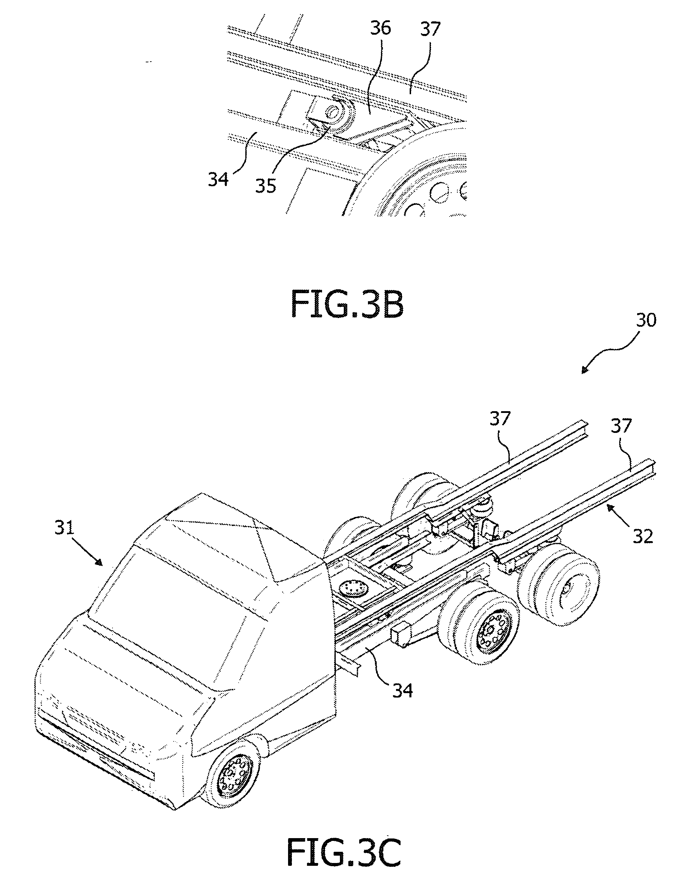

Figure 1A shows an assembly 1 of a tractor 2 and a trailer 3. Tractor 2 is provided with a cab 4, two wheel axles 5,6 and a chassis 7. Trailer 3 is provided with a single wheel axle 8, a chassis 9 and a cargo space 10. Particularly important is a coupling 11 with which tractor 2 and trailer 3 are mutually connected. As can be seen in figures 1B and 1C, tractor 2 and trailer 3 are pivotally connected to each other; when combination 1 travels over a bump 12, all wheel axles 5, 6, and 8 will remain in contact with the ground 13. The advantage of such a pivotable coupling is that all wheels axles 5, 6 and 8 remain load-bearing when passing over bump 12 (provided of course this is not too high). According to the invention tractor 2 and trailer 3 are however rigidly coupled to each other; this will be further elucidated with reference to figures 2 and 3.

Figure 2A shows a tractor/trailer combination 20 with a tractor 21 and a trailer 22, which are mutually connected, among other ways, via a known fifth wheel coupling 23. However, this fifth wheel coupling 23 individually provides the combination 20 with more relative freedom of movement than is desirable. A projecting part 24 is therefore also mounted on the underside of a chassis 25 of trailer 22, and co-acts with a guide which forms part of chassis 25 of trailer 22. Such a guide 26 is shown in detail in figure 2B. In this figure guide 26 consists only of a guide plate 26 which is fixed to chassis beams 27 of tractor 21. A lateral displacement (see also figure 2C) of trailer 22 relative to tractor 21 is impossible due to co-action of projecting part 24 and guide plate 27.

Figure 3A shows a tractor/trailer combination 30 with a tractor 31 and a trailer 32 which are mutually connected via a pivot coupling 33. Figure 3B shows pivot coupling 33 in more detail. A trailer chassis 34 is provided with a roller 35 connected rigidly to chassis 34. Alternatively this can also be a ball-shaped body. A roller housing 36 engages on roller 35. Roller housing 36 is connected rigidly to a chassis 37 of trailer 32. Roller 35 in combination with roller housing 36 together form a hinge with only a single freedom of rotation. Figure 3C shows the combination 30 in perspective view. This combination 30 is also rigid in the direction of travel, while a relative freedom of rotation still remains.

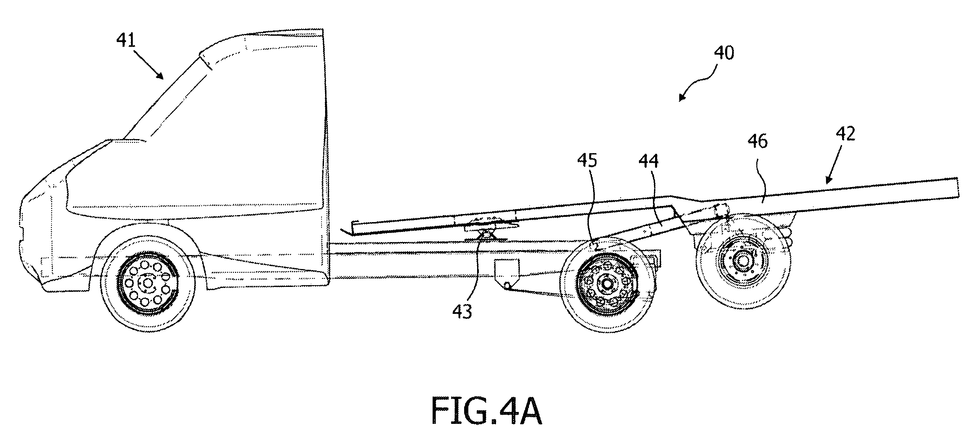

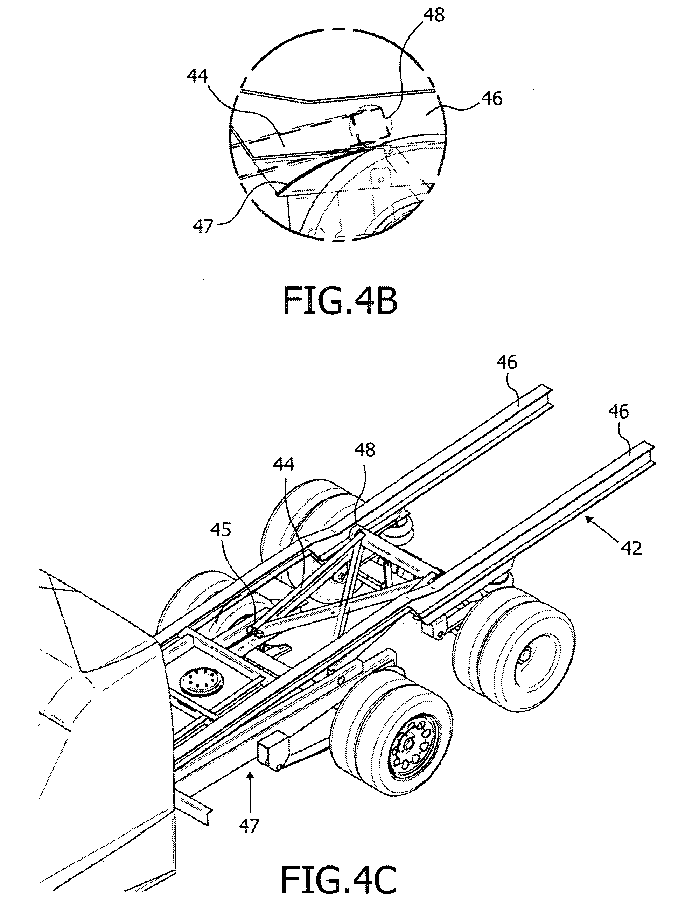

Figure 4A shows a tractor/trailer combination 40 with a tractor 41 and a trailer 42, which are mutually connected via a fifth wheel coupling 43. The mutual connection between the tractor (or truck) 41 and trailer 42 is also formed by a coupling arm 44. Coupling arm 44 is connected to tractor 41 for pivoting on one side round a rotation axis 45, and on the other side the coupling arm 44 is enclosed laterally by frame 46 of trailer 42. Figure 4B shows the arrangement of coupling arm 44 in frame 46 of trailer 42 in more detail. It can also be seen there that the frame is also provided with a guide 47 with which the outer end of arm 44 is guided to the desired location during coupling. As also shown in figure 4C, the outer end of coupling arm 44 that engages on frame 42 is provided with cam rollers 48, which are enclosed laterally (perpendicularly of the direction of travel, i.e. perpendicularly of the longitudinal axis of combination 40) with only a limited clearance between beams of trailer frame 46. The coupling arm is preferably connected to tractor 41 with a torsion spring, not shown in these figures, for the purpose of thus holding the coupling arm in a controlled situation when uncoupled, in order to for instance prevent damage to a kingpin (forming part of fifth wheel coupling 43) and to place coupling arm 44 in a controlled position, whereby it will engage on guide 48 during coupling. Said torsion spring also has the advantage that coupling arm 44 is less likely to begin juddering in the coupled position. Coupling arm 44 thus forms a hinge with only a single freedom of rotation. Figure 4C shows the combination 40 in perspective view. Combination 40 is rigid in the direction of travel, while a relative freedom of rotation once again still remains.

## Claims

1. Tractor/trailer combination **(1, 20, 30, 40)**, comprising:
- a motorized tractive vehicle **(2)**, and
- a trailer **(3)** provided with at least one wheel axle **(8)**,
wherein the tractor **(2)** and the trailer **(3)** are provided with co-acting, releasable coupling means which provide the tractor **(2)** and the trailer **(3)** in the coupled situation with freedom of movement relative to each other in only one direction of rotation whilst locking the combination such that it is rigid in the direction of travel, which co-acting coupling means comprise a fifth wheel coupling **(23, 33, 43)**, and wherein the co-acting coupling means also comprise a coupling arm **(44)**, which coupling arm **(44)** is connected pivotally on one side to one of the combination parts **(2, 3, 21, 22, 31, 32, 41, 42)**, and on the other side is locked in a direction perpendicularly of a wheel axle **(5, 6, 8)** of the tractor/trailer combination **(1, 20, 30, 40)** by locking means connected to the other combination part **(2, 3, 21, 22, 31, 32, 41, 42)**, wherein the locking means comprise a guide with parallel guide surfaces which are perpendicular to a wheel axle **(5, 6, 8)** of the tractor/trailer combination **(1, 20, 30, 40),**
**characterized in that** the locking means are formed by two parallel grooves which are adapted to receive projecting parts **(48)** forming part of the coupling arm **(44).**

2. Tractor/trailer combination **(1, 20, 30, 40)** as claimed in claim 1, **characterized in that** the rotation axis of the rotation freedom provided by the co-acting coupling means is parallel to a wheel axle **(5, 6, 8)** of the tractor/trailer combination **(1, 20, 30, 40).**

3. Tractor/trailer combination **(1, 20, 30, 40)** as claimed in any of the foregoing claims, **characterized in that** the coupling arm **(44)** is connected pivotally on one side to one of the combination parts **(2, 3, 21, 22, 31, 32, 41, 42)** with a rotation freedom round a rotation axis parallel to a wheel axle (5, 6, 8) of the tractor/trailer combination **(1, 20, 30, 40).**

4. Tractor/trailer combination **(1, 20, 30, 40)** as claimed in any of the foregoing claims, **characterized in that** the coupling arm **(44)** is connected pivotally to the tractive combination part **(2, 21, 31, 41)** and the locking means form part of the chassis **(46)** of the trailer **(3, 22, 32, 42).**

5. Tractor/trailer combination **(1, 20, 30, 40)** as claimed in any of the foregoing claims, **characterized in that** the tractor **(2, 21, 31, 41)** and the trailer **(3, 22, 32, 42)** are provided with co-acting stops for the purpose of limiting the freedom of movement in the rotation direction.

6. Tractor/trailer combination **(1, 20, 30, 40)** as claimed in any of the foregoing claims, **characterized in that** the locking means are provided with at least contact surfaces manufactured from wear-resistant polymer material.

7. Tractor/trailer combination **(1, 20, 30, 40)** as claimed in claim **6**, **characterized in that** the contact surfaces of wear-resistant polymer material are embodied as exchangeable wearing parts.

8. Tractor **(2, 21, 31, 41)** provided with coupling means according to any one of claims 1-7, which provide freedom of movement in only one rotation direction when coupled to a trailer **(3, 22, 32, 42),** for the purpose of realizing a tractor/trailer combination **(1, 20, 30, 40)** as claimed in any of the foregoing claims.

9. Trailer **(3, 22, 32, 42)** provided with mating-coupling means according to any one of claims 1-7, which provide freedom of movement in only one rotation direction when coupled to a tractor **(2, 21, 31, 41),** for the purpose of realizing a tractor/trailer combination **(1, 20, 30, 40)** as claimed in any of the claims **1-7.**

## Patentansprüche

1. Sattelschlepperkombination (1, 20, 30, 40), bestehend aus:
- einer Zugmaschine (2) und
- einem Anhänger (3), der mit mindestens einer Radachse (8) versehen ist,
worin die Zugmaschine (2) und der Anhänger (3) mit zusammenarbeitenden, lösbaren Kupplungsmitteln versehen sind, die die Zugmaschine (2) und den Anhänger (3) im gekuppelten Zustand mit einer Bewegungsfreiheit in nur einer Drehrichtung relativ zueinander versehen, während die Kombination auf eine Weise festgesetzt wird, dass sie in Fahrtrichtung starr ist, welche zusammenarbeitenden Kupplungsmittel eine Fünftes-Rad-Kupplung (23, 33, 43) umfassen, und worin die zusammenarbeitenden Kupplungsmittel auch einen Kupplungsarm (44) umfassen, welcher Kupplungsarm (44) auf der einen Seite mit einem der Kombinationsteile (2, 3, 21, 22, 31, 32, 41, 42) schwenkbar verbunden ist, und auf der anderen Seite in einer Richtung senkrecht zu einer Radachse (5, 6, 8) der Sattelschlepperkombination (1, 20, 30, 40) mittels Feststellmitteln festgesetzt ist, die mit dem anderen Kombinationsteil (2,3,21,22,31,32,41,42) verbunden sind, worin die Feststellmittel eine Führung mit parallelen Führungsflächen umfassen, die senkrecht zu einer Radachse (5, 6, 8) der Sattelschlepperkombination (1, 20, 30, 40) stehen,
**dadurch gekennzeichnet, dass** die Feststellmittel von zwei parallelen Rillen gebildet werden, die ausgelegt sind, vorstehende Teile (48) aufzunehmen, die einen Teil des Kupplungsarmes (44) bilden.

2. Sattelschlepperkombination (1, 20, 30, 40) nach Anspruch 1, **dadurch gekennzeichnet, dass** die Drehachse der freien Rotation, die von den zusammenarbeitenden Kupplungsmitteln bereitgestellt wird, parallel zu einer Radachse (5, 6, 8) der Sattelschlepperkombination (1, 20, 30, 40) liegt.

3. Sattelschlepperkombination (1, 20, 30, 40) nach einem der vorhergehenden Ansprüche, **dadurch gekennzeichnet, dass** der Kupplungsarm (44) an einer Seite mit einem der Kombinationsteile (2,3,21,22,31,32,41,42) schwenkbar verbunden ist, mit freier Rotation um eine Drehachse, die parallel zu einer Radachse (5, 6, 8) der Sattelschlepperkombination (1, 20, 30, 40) liegt.

4. Sattelschlepperkombination (1, 20, 30, 40) nach einem der vorhergehenden Ansprüche, **dadurch gekennzeichnet, dass** der Kupplungsarm (44) mit dem Zugkombinationsteil (2, 21, 31, 41) schwenkbar verbunden ist und die Feststellmittel Teil des Fahrgestells (46) des Anhängers (3, 22, 32, 42) bilden.

5. Sattelschlepperkombination (1, 20, 30, 40) nach einem der vorhergehenden Ansprüche, **dadurch gekennzeichnet, dass** die Zugmaschine (2, 21, 31, 41) und der Anhänger (3, 22, 32, 42) mit zusammenarbeitenden Anschlägen zum Zweck der Begrenzung der Bewegungsfreiheit in der Drehrichtung versehen sind.

6. Sattelschlepperkombination (1, 20, 30, 40) nach einem der vorhergehenden Ansprüche, **dadurch gekennzeichnet, dass** die Feststellmittel mit zumindest Kontaktflächen versehen sind, die aus einem verschleißfesten Polymerwerkstoff hergestellt sind.

7. Sattelschlepperkombination (1, 20, 30, 40) nach Anspruch 6, **dadurch gekennzeichnet, dass** die Kontaktflächen aus verschleißfestem Polymerwerkstoff als austauschbare Verschleißteile ausgeführt sind.

8. Zugmaschine (2, 21, 31, 41), die mit Kupplungsmitteln nach einem der Ansprüche 1-7 versehen ist, die die Bewegungsfreiheit in nur einer Drehrichtung ermöglichen, wenn sie an einen Anhänger (3, 22, 32, 42) gekuppelt sind, zum Zweck der Verwirklichung einer Sattelschlepperkombination (1, 20, 30, 40) nach einem der vorhergehenden Ansprüche.

9. Zugmaschine (2, 21, 31, 41), die mit Gegen-Kupplungsmitteln nach einem der Ansprüche 1-7 versehen ist, die die Bewegungsfreiheit in nur einer Drehrichtung ermöglichen, wenn sie an eine Zugmaschine (2, 21, 31, 41) gekuppelt sind, zum Zweck der Verwirklichung einer Sattelschlepperkombination (1, 20, 30, 40) nach einem der Ansprüche 1-7.

## Revendications

1. Ensemble tracteur/remorque **(1, 20, 30, 40)**, comprenant :
- un véhicule tracteur motorisé **(2)**, et
- une remorque **(3)** pourvue d'au moins un arbre de roue **(8),** sachant que le tracteur **(2)** et la remorque **(3)** sont pourvus de moyens d'attelage détachables, agissant conjointement, qui fournissent au tracteur **(2)** et à la remorque **(3)** dans la situation attelée une liberté de mouvement l'une par rapport à l'autre dans seulement un sens de rotation tout en verrouillant l'ensemble de telle sorte qu'il soit rigide dans le sens de déplacement, lesquels moyens d'attelage agissant conjointement comprennent une sellette d'attelage **(23, 33, 43)**, et sachant que les moyens d'attelage agissant conjointement comprennent aussi un bras d'attelage **(44),** lequel bras d'attelage **(44)** est attaché à pivotement d'un côté à l'une des parties **(2, 3, 21, 22, 31, 32, 41, 42)** de l'ensemble et est d'autre part verrouillé dans une direction perpendiculaire à un arbre de roue **(5, 6, 8)** de l'ensemble tracteur/remorque **(1, 20, 30, 40)** par des moyens de verrouillage attachés à l'autre partie **(2, 3, 21, 22, 31, 32, 41, 42)** de l'ensemble, sachant que les moyens de verrouillage comprennent un guide ayant des surfaces de guidage parallèles qui sont perpendiculaires à un arbre de roue **(5, 6, 8)** de l'ensemble tracteur/remorque **(1, 20, 30, 40)**,
**caractérisé en ce que** les moyens de verrouillage sont formés par deux rainures parallèles qui sont adaptées pour recevoir des parties saillantes **(48)** faisant partie du bras d'attelage **(44).**

2. Ensemble tracteur/remorque **(1, 20, 30, 40)** selon la revendication 1, **caractérisé en ce que** l'axe de rotation de la liberté de rotation procurée par les moyens d'attelage agissant conjointement est parallèle à un arbre de roue **(5, 6, 8)** de l'ensemble tracteur/remorque **(1, 20, 30, 40).**

3. Ensemble tracteur/remorque **(1, 20, 30, 40)** selon l'une quelconque des revendications précédentes, **caractérisé en ce que** le bras d'attelage **(44)** est attaché à pivotement d'un côté à l'une des parties **(2, 3, 21, 22, 31, 32, 41, 42)** de l'ensemble avec une liberté de rotation autour d'un axe de rotation parallèle à un arbre de roue **(5, 6, 8)** de l'ensemble tracteur/remorque **(1, 20, 30, 40).**

4. Ensemble tracteur/remorque **(1, 20, 30, 40)** selon l'une quelconque des revendications précédentes, **caractérisé en ce que** le bras d'attelage **(44)** est attaché à pivotement à la partie tractrice **(2, 21, 31, 41)** de l'ensemble et **en ce que** les moyens de verrouillage font partie du châssis **(46)** de la remorque **(3, 22, 32, 42).**

5. Ensemble tracteur/remorque **(1, 20, 30, 40)** selon l'une quelconque des revendications précédentes, **caractérisé en ce que** le tracteur **(2, 21, 31, 41)** et la remorque **(3, 22, 32, 42)** sont pourvus de butées agissant conjointement dans le but de limiter la liberté de mouvement dans le sens de rotation.

6. Ensemble tracteur/remorque **(1, 20, 30, 40)** selon l'une quelconque des revendications précédentes, **caractérisé en ce que** les moyens de verrouillage sont pourvus au moins de surfaces de contact fabriquées en un matériau polymère résistant à l'usure.

7. Ensemble tracteur/remorque **(1, 20, 30, 40)** selon la revendication 6, **caractérisé en ce que** les surfaces de contact en matériau polymère résistant à l'usure sont réalisées sous la forme de pièces d'usure remplaçables.

8. Tracteur **(2, 21, 31, 41)** pourvu de moyens d'attelage selon l'une quelconque des revendications 1-7 qui procurent une liberté de mouvement dans seulement un sens de rotation quand il est attelé à une remorque **(3, 22, 32, 42),** dans le but de réaliser un ensemble tracteur/remorque **(1, 20, 30, 40)** selon l'une quelconque des revendications précédentes.

9. Remorque **(3, 22, 32, 42)** pourvue de moyens d'accouplement-attelage selon l'une quelconque des revendications 1-7 qui procurent une liberté de mouvement dans seulement un sens de rotation quand elle est attelée à un tracteur **(2, 21, 31, 41)**, dans le but de réaliser un ensemble tracteur/remorque **(1, 20, 30, 40)** selon l'une quelconque des revendications 1-7.
